# EUROPEAN PATENT APPLICATION

(11) **EP 1 911 811 A1**
(43) Date of publication of application: **16.04.2008**
(21) Application number: 06781926.8
(22) Date of filing: 28.07.2006
(51) Int. Cl.: C09B 67/04, C09B 67/20, C09B 67/50, C09D 11/02

(54) **METHOD FOR PRODUCTION OF PIGMENT COMPOSITION, METHOD FOR PRODUCTION OF PRINTING INK, AND PRINTED MATTER**

(30) Priority: 29.07.2005 JP 2005220619; 29.07.2005 JP 2005220620
(71) Applicant: TOYO INK MFG. CO., LTD., Tokyo 104-0031 (JP)
(72) Inventor: SUZUKI, Yoshiko, Chuo-ku, Tokyo 104-0031 (JP); SATO, Koji, Chuo-ku, Tokyo 104-0031 (JP); UTSUGI, Masayoshi, Chuo-ku, Tokyo 104-0031 (JP); SHIRATORI, Susumu, Chuo-ku, Tokyo 104-0031 (JP)
(74) Representative: Koepe, Gerd L.
(86) International application number: PCT/JP2006/315016
(87) International publication number: WO 2007/013606

(57) **Abstract**

The present invention aims to provide a method for producing a copper phthalocyanine pigment composition that has a small aspect ratio and a greenish hue, and exhibits excellent dispersibility and particularly superior print gloss when prepared in the form of an ink, as well as a method for producing a printing ink that uses the pigment composition, and a printed matter obtained by conducting printing using the printing ink. In order to achieve this aim, the present invention provides a method for producing a pigment composition that comprises adding, to a crude copper phthalocyanine, from 20 to 80% by weight of an ester-modified product produced by modification of a resin acid and/or a hydrocarbon resin with an unsaturated carboxylic acid or an anhydride thereof and an alcohol, and conducting dry grinding, as well as a method for producing a printing ink that uses the pigment composition, and a printed matter.

## Description

### TECHNICAL FIELD

The present invention relates to a novel and useful method for producing a pigment composition, a method for producing a printing ink and a printed matter. More specifically, the invention relates to a method for producing a pigment composition capable of providing a printing ink that can be used favorably in offset lithographic printing techniques such as newspaper printing, sheet-fed printing, web offset printing and waterless printing, as well as a method for producing a printing ink that uses such a pigment composition, and a printed matter.

### BACKGROUND ART

Crude copper phthalocyanine exists as giant β-crystal particles with an average particle size of approximately 10 to 200 µm, and can be used as the pigment for printing inks and the like by reducing the particle size (by conducting pigmentation) to approximately 0.02 to 0.1 µm.

Among pigmentation techniques, the most common technique is a method known as solvent salt milling. In this method, milling is conducted by adding, to the crude copper phthalocyanine, a milling agent such as salt and an organic solvent that promotes crystal transition to the β-form. The β-copper phthalocyanine pigment obtained using this method has an aspect ratio (the ratio between the minor axis and major axis of the primary particles) within a range from 1 to 3 and exhibits a clear greenish appearance with favorable color strength, and is consequently suitable for printing inks and is in widespread use. However, this method requires quantities of the milling agent and organic solvent that are several times that of the pigment, meaning recovery of the milling agent and the organic solvent requires considerable time and effort.

In response to this problem, Japanese Patent Laid-Open No. H09-272833 discloses a method for producing a printing ink that comprises adding a printing ink resin to a crude copper phthalocyanine, conducting dry grinding, and then heating the thus obtained ground material (the pigment) in a printing ink solvent or varnish. Although this method enables the production, by a simple technique, of a printing ink of superior printability that contains a β-copper phthalocyanine pigment with a similar aspect ratio and green coloring to that produced by salt milling, if the proportion of the resin added during the dry grinding step is too small, then the resulting print gloss is often inferior.

### DISCLOSURE OF INVENTION

In light of the above issues, an object of the present invention is to provide a method for producing a copper phthalocyanine pigment composition that has a small aspect ratio and a greenish hue, and exhibits excellent dispersibility and particularly superior print gloss when prepared in the form of an ink, as well as a method for producing a printing ink that uses a pigment composition prepared using the above production method, and a printed matter obtained by using the printing ink.

As a result of intensive research aimed at achieving the above object, the inventors of the present invention discovered a method for producing a copper phthalocyanine pigment composition that has a small aspect ratio and a greenish hue, and exhibits excellent dispersibility and particularly superior print gloss when prepared in the form of an ink, as well as a method for producing a printing ink that uses a pigment composition prepared using the above method, and they were therefore able to complete the present invention.

In other words, the present invention exhibits the features disclosed below in aspects (1) to (10).

(1) A method for producing a pigment composition, comprising adding, to a crude copper phthalocyanine, from 20 to 80% by weight of an ester-modified product produced by modification of a resin acid and/or a hydrocarbon resin with an unsaturated carboxylic acid or an anhydride thereof and an alcohol, and conducting dry grinding.

(2) The method for producing a pigment composition according to aspect (1) above, wherein the hydrocarbon resin comprises, as a structural component, a 5-membered ring compound represented by a general formula (I) shown below: 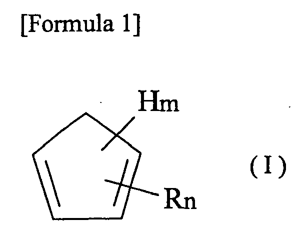 (wherein, H represents a hydrogen atom, R represents an alkyl group of 1 to 3 carbon atoms, and m and n each represent an integer from 0 to 6, provided that m+n = 6).

(3) The method for producing a pigment composition according to either aspect (1) or (2) above, wherein the resin acid comprises not less than 30% by weight of a dimerized resin acid adduct.

(4) The method for producing a pigment composition according to any one of aspects (1) through (3) above, wherein the alcohol is an alcohol of 6 to 20 carbon atoms.

(5) The method for producing a pigment composition according to aspect (4) above, wherein the alcohol of 6 to 20 carbon atoms contains a branched alkyl group, and the total number of carbon atoms within the branched alkyl group is not less than 4.

(6) The method for producing a pigment composition according to any one of aspects (1) through (5) above, wherein the ester-modified product is an ester-modified product obtained by further reaction with a carboxyl group-containing compound of not less than 6 carbon atoms.

(7) A method for producing a printing ink, comprising heating a pigment composition obtained using the method according to any one of aspects (1) through (6) above within a printing ink solvent or varnish at a temperature within a range from 80 to 170°C.

(8) The method for producing a printing ink according to aspect (7) above, wherein the volatile component upon heating the printing ink for one hour at 110°C is not more than 1 %.

(9) The method for producing a printing ink according to aspect (7) or (8) above, wherein of the copper phthalocyanine particles contained within the produced printing ink, the proportion of β-crystalline copper phthalocyanine particles with an aspect ratio of 1 to 2 is not less than 99%.

(10) A printed matter obtained by printing a printing ink produced using the method for producing a printing ink according to any one of aspects (7) through (9) above onto a substrate.

In the present invention, the term "ester-modified product" refers to an esterified resin acid in those cases where a resin acid is used alone, an esterified hydrocarbon resin in those cases where a hydrocarbon resin is used alone, or a material obtained by esterification of a resin acid and a hydrocarbon resin using an unsaturated carboxylic acid or an anhydride thereof and an alcohol in those cases where a resin acid and a hydrocarbon resin are used together.

The method for producing a pigment composition according to the present invention enables a copper phthalocyanine pigment composition that has a small aspect ratio and a greenish hue, and exhibits excellent dispersibility and particularly superior print gloss when prepared in the form of an ink, to be produced simply and at low cost, and moreover, the method for producing a printing ink that uses a pigment composition according to the present invention enables the provision of a printing ink that not only exhibits excellent printing properties such as fluidity, tack and color strength, but also produces excellent print gloss, together with a printed matter obtained by conducting printing using the printing ink.

This Application is based upon and claims the benefit of priority from prior Japanese patent applications made by the applicants of the present invention, namely, Japanese Patent Application Nos. 2005-220619 (filed on July 29, 2005) and 2005-220620 (filed on July 29, 2005); the entire contents of which are incorporated herein by reference.

### BEST MODE FOR CARRYING OUT THE INVENTION

As follows is a description of specifics of the present invention.

There are no particular restrictions on the resin acid used in the present invention, provided it is an organic acid that exists as a free acid or an ester within a natural resin. Examples of suitable resin acids include abietic acid, neoabietic acid, d-pimaric acid, iso-d-pimaric acid, podocarpic acid, agathenedicarboxylic acid, dammarolic acid, benzoic acid, cinnamic acid, and p-oxycinnamic acid. Furthermore, from the viewpoint of ease of handling, the resin acid is preferably used in the form of a natural resin comprising one or more resin acids, and examples of these natural resins include gum rosin, wood rosin, tall oil rosin, disproportionated rosin, polymerized rosin, copal and dammar. From the viewpoints of solubility and molecular weight, a polymerized rosin is preferred. A polymerized rosin is a mixture containing rosin monomer and a dimerized adduct produced by partial dimerization of the rosin using an acid catalyst. In the present invention, the use of a resin acid comprising not less than 30% by weight of this type of dimerized adduct (dimerized resin acid adduct) is preferred.

There are no particular restrictions on the hydrocarbon resin used in the present invention, provided it is a resin generated from an unsaturated petroleum distillate raw material, but a hydrocarbon resin comprising, as a structural component, a residue of a 5-membered ring compound represented by a general formula (I) shown below is preferred in terms of the solubility and melting point of the resulting resin. 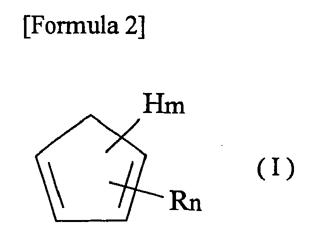 (wherein, H represents a hydrogen atom, R represents an alkyl group of 1 to 3 carbon atoms, and m and n each represent an integer from 0 to 6, provided that m+n = 6). These types of hydrocarbon resins can be obtained by normal methods, for example by conducting a heat polymerization of either alone cyclopentadiene-based monomer such as cyclopentadiene, methylcyclopentadiene, a dimer through pentamer thereof or a copolymer thereof, or a mixture of a cyclopentadiene-based monomer and another copolymerizable co-monomer, either in the presence of an acid catalyst or without the use of a catalyst. Examples of commonly used catalysts include Friedel-Crafts Lewis acid catalysts such as boron trifluoride, and complexes thereof with a phenol, ether or acetic acid. Furthermore, the copolymerization ratio within a mixture of a cyclopentadiene-based monomer and another copolymerizable co-monomer need to provide at least 15 mol% of the cyclopentadiene-based monomer.

Suitable examples of the above co-monomer include olefins of 2 to 10 carbon atoms such as ethylene, propylene, propene, 1-butene, 2-butene, isobutylene, 1-pentene, 2-pentene, diisobutylene (a mixture of 2,4,4-trimethylpentene-1 and 2,4,4-trimethylpentene-2) obtained by dimerization of isobutylene using an acid catalyst, 1-hexene, 2-hexene, 1-octene, 2-octene, 4-octene and 1-decene, chain-like conjugated dienes such as 1,3-butadiene, 1,3-pentadiene (piperylene), isoprene, 1,3-hexadiene and 2,4-hexadiene, vinyl aromatics such as styrene, α-methylstyrene, β-methylstyrene, isopropenyltoluene, p-tert-butylstyrene, p-hydroxystyrene, vinyltoluene and divinylbenzene, and aromatic unsaturated compounds such as indene, methylindene, coumarone (benzofuran) and methylcoumarone (2-methylbenzofuran).

The types of hydrocarbon resins described above are available commercially under product names such as Neoresin EP-110, Neoresin EP-140, Neoresin 540 and Neoresin 560 manufactured by Nippon Oil Corporation, Marukarez M100A, Marukarez M600A, Marukarez M890A, Marukarez M825A, Marukarez M845A, Marukarez M905A, Marukarez M925A, Marukarez M510A, Marukarez M525A and Marukarez M545A manufactured by Maruzen Petrochemical Co., Ltd., Quintone 1325 and Quintone 1345 manufactured by Zeon Corporation, and Toho Hiresin PA-140 and Coporex 2100 manufactured by Toho Chemical Industry Co., Ltd.

Furthermore, the unsaturated carboxylic acid or anhydride thereof used in obtaining an ester-modified product in the present invention is an α,β-unsaturated carboxylic acid or anhydride thereof, and specific examples include acrylic acid, methacrylic acid, maleic acid, maleic anhydride, fumaric acid, citraconic acid, citraconic anhydride, itaconic acid, itaconic anhydride, crotonic acid, isocrotonic acid and 2,4-hexadienoic acid (sorbic acid).

Furthermore, there are no particular restrictions on the alcohol used for obtaining an ester-modified product in the present invention, and any type of alcohol is suitable, including aliphatic or aromatic alcohols, straight-chain, branched or cyclic alcohols, saturated or unsaturated alcohols, and monohydric, dihydric, or trihydric or higher alcohols. Furthermore, either a single alcohol may be used alone, or a combination of a plurality of alcohols containing an arbitrary quantity of each alcohol may be used, although the valence of the alcohol used is preferably elected in accordance with the desired molecular weight for the ester-modified product.

Examples of suitable monohydric aliphatic alcohols containing a saturated alkyl group include straight-chain alkyl monohydric alcohols such as 1-butanol, 2-butanol, 1-pentanol, 2-pentanol, 1-hexanol, 2-hexanol, 3-hexanol, 1-heptanol, 2-heptanol, 3-heptanol, 1-octanol, 2-octanol, 3-octanol, 1-nonanol, 2-nonanol, 1-decanol, 2-decanol, 1-undecanol, 1-dodecanol, 2-dodecanol, 1-tridecanol, 1-tetradecanol, 2-tetradecanol, 1-pentadecanol, 1-hexadecanol, 2-hexadecanol, 1-heptadecanol, 1-octadecanol, 1-nonadecanol and 1-eicosanol, branched alkyl monohydric alcohols such as 2-propyl-1-pentanol, 2-ethyl-1-hexanol, 4-methyl-3-heptanol, 6-methyl-2-heptanol, 2,4,4-trimethyl-1-pentanol, 3,5,5-trimethyl-1-hexanol, 2,6-dimethyl-4-heptanol, isononyl alcohol, 3,7-dimethyl-1-octanol, 3,7-dimethyl-3-octanol, 2,4-dimethyl-1-heptanol and 2-heptylundecanol, and cyclic alkyl monohydric alcohols such as cyclohexanol, cyclohexanemethanol, cyclopentanemethylol, dicyclohexylmethanol, tricyclodecanemonomethylol, norbomeol and hydrogenated rosin alcohol (product name: Abitol, manufactured by Hercules, Inc.).

Furthermore, examples of suitable monohydric aliphatic alcohols containing an unsaturated alkyl group include monohydric aliphatic alcohols containing an alkenyl group having one unsaturated double bond within each molecule, an alkadienyl group having two unsaturated double bonds within each molecule, an alkatrienyl group having three unsaturated double bonds within each molecule, or an alkapolyenyl group having four or more unsaturated double bonds within each molecule, and specific examples include straight-chain, branched and cyclic unsaturated alkyl monohydric alcohols such as allyl alcohol, oleyl alcohol, 11-hexadecen-1-ol, 7-tetradecen-1-ol, 9-tetradecen-1-ol, 11-tetradecen-1-ol, 7-dodecene-1-ol, 10-undecen-1-ol, 9-decen-1-ol, citronellol, 3-nonen-1-ol, 1-octen-3-ol, 1-hexen-3-ol, 2-hexen-1-ol, 3-hexen-1-ol, 4-hexen-1-ol, 5-hexen-1-ol, dodecadien-1-ol, 2,4-dimethyl-2,6-heptadien-1-ol, 3,5,5-trimethyl-2-cyclohexen-1-ol, 1,6-heptadien-4-ol, 3-methyl-2-cyclohexen-1-ol, 2-cyclohexen-1-ol, 1,5-hexadien-3-ol, phytol, 3-methyl-3-buten-1-ol, 3-methyl-2-buten-1-ol, 4-methyl-3-penten-1-ol, 3-methyl-1-penten-3-ol, 6-methyl-5-penten-2-ol, geraniol, rosinol, linanol and α-terpineol.

Furthermore, examples of suitable dihydric aliphatic alcohols include straight-chain alkylene dihydric alcohols such as ethylene glycol, 1,2-propylene glycol, 1,3-propylene glycol, 1,2-butanediol, 1,4-butanediol, 1,2-pentanediol, 1,5-pentanediol, 1,6-hexanediol, 1,2-hexanediol, 1,5-hexanediol, 2,5-hexanediol, 1,7-heptanediol, 1,8-octanediol, 1,2-octanediol, 1,9-nonanediol, 1,2-decaendiol, 1,10-decanediol, 1,2-decaendiol, 1,12-dodecanediol, 1,2-dodecanediol, 1,14-tetradecanediol, 1,2-tetradecanediol, 1,16-hexadecanediol and 1,2-hexadecanediol, branched alkylene dihydric alcohols such as 2-methyl-2,4-pentanediol, 3-methyl-1,5-pentanediol, 2-methyl-2-propyl-1,3-propanediol, 2,4-dimethyl-2,4-pentanediol, 2,2-diethyl-1,3-propanediol, 2,2,4-trimethyl-1,3-pentanediol, dimethyloloctane, 2-ethyl-1,3-hexanediol, 2,5-dimethyl-2,5-hexanediol, 2-methyl-1,8-octanediol, 2-butyl-2-ethyl-1,3-propanediol and 2,4-diethyl-1,5-pentanediol, and cyclic alkylene dihydric alcohols such as 1,2-cyclohexanediol, 1,4-cyclohexanediol, 1,4-cyclohexanedimethanol, 1,2-cycloheptanediol and tricyclodecanedimethanol.

Furthermore, examples of suitable trihydric and higher polyhydric aliphatic alcohols include straight-chain, branched and cyclic polyhydric alcohols such as glycerol, trimethylolpropane, 1,2,6-hexanetriol, 3-methylpentan-1,3,5-triol, hydroxymethylhexanediol, trimethyloloctane, pentaerythritol, diglycerol, ditrimethylolpropane, dipentaerythritol, sorbitol, inositol and tripentaerythritol.

Examples of suitable aromatic alcohols include benzyl alcohol, 2-phenylethyl alcohol, 2-phenoxyethanol and bis(2-hydroxyethyl) terephthalate.

Furthermore, the above alcohol is preferably an alcohol of 6 to 20 carbon atoms. If the number of carbon atoms is less than 6, then the solubility of the resulting ester-modified product in non-aromatic solvents and vegetable oils tends to be inferior, whereas if the number of carbon atoms exceeds 20, then the melting point of the resulting ester-modified product tends to drop. Furthermore, the alcohol of 6 to 20 carbon atoms preferably contains a branched alkyl group, and alcohols in which the total number of carbon atoms within the branched alkyl group is not less than 4 are particularly preferred. Here, a branched alkyl group describes an alkyl group with a primary carbon atom at the terminal, and describes all of the alkyl groups in the case of monohydric alcohols, and those groups other than the main chain having hydroxyl groups at both terminals in the case of dihydric or higher alcohols. When the alcohol contains two or more branched alkyl groups, the combined total of the number of carbon atoms across all the branched alkyl groups is referred to as the total number of carbon atoms within the branched alkyl groups.

If required, the ester-modified product of the present invention may be obtained by further reaction with a carboxyl group-containing compound other than the above unsaturated carboxylic acid or anhydride thereof. There are no particular restrictions on this carboxyl group-containing compound, and suitable examples include saturated carboxylic acids such as acetic acid, propionic acid, butyric acid, valeric acid, caproic acid, enanthic acid, caprylic acid, pelargonic acid, capric acid, undecylic acid, lauric acid, tridecylic acid, myristic acid, pentadecylic acid, palmitic acid, heptadecylic acid, stearic acid, nonadecanoic acid, arachic acid and behenic acid, monocarboxylic acid compounds such as linderic acid, myristoleic acid, palmitoleic acid, undecylenic acid, oleic acid, elaidic acid, gadoleic acid, gondoleic acid, cetoleic acid, erucic acid, brassidic acid, sorbic acid, linolic acid, linoelaidic acid, linoleic acid, eleostearic acid, arachidonic acid, clupanodonic acid and nisinic acid, dicarboxylic acid compounds such as oxalic acid, malonic acid, succinic acid, glutaric acid, adipic acid, maleic acid, fumaric acid, 3,3-dimethylglutaric acid, 2,4-diethylglutaric acid, sebacic acid, dodecanoic diacid, azelaic acid alkenyl group (4 to 28 carbon atoms)-substituted succinic acids, phthalic acid, isophthalic acid and terephthalic acid, and acid anhydrides of the above acids. Moreover, fatty acids of natural fats and oils can also be used, including tung oil fatty acid, linseed oil fatty acid, soybean oil fatty acid, coconut oil fatty acid, (dehydrated) castor oil fatty acid, palm oil fatty acid, safflower oil fatty acid, cottonseed oil fatty acid, rice bran oil fatty acid, olive oil fatty acid and canola oil fatty acid, as well dimer acids of these fatty acids such as tung oil dimer fatty acid and linseed oil dimer fatty acid. Either a single carboxyl group-containing compound may be used alone, or a combination of a plurality of carboxyl group-containing compounds containing an arbitrary quantity of each compound may be used, although if due consideration is given to the solubility of the resulting ester-modified product in non-aromatic solvents and vegetable oils, then a carboxyl group-containing compound containing not less than 6 carbon atoms is preferred.

The ester-modified product used in the present invention can be obtained by modifying the above resin acid and/or hydrocarbon resin using the above unsaturated carboxylic acid or anhydride thereof and the above alcohol. During this modification, the resin acid and/or hydrocarbon resin may be first subjected to an addition modification with the unsaturated carboxylic acid or anhydride thereof, and subsequently esterified using the alcohol, or alternatively, the resin acid and/or hydrocarbon resin may be esterified by simultaneous treatment with the unsaturated carboxylic acid or anhydride thereof and the alcohol. Moreover, the unsaturated carboxylic acid or anhydride thereof may be supplied to both the addition modification and the esterification. Furthermore, if required, an aforementioned carboxyl group-containing compound other than the unsaturated carboxylic acid or anhydride thereof may also be supplied to the modification process. In this case, the total number of mols of carboxyl groups relative to each 1 mol of hydroxyl groups is preferably within a range from 0.5 to 3 mols from the viewpoint of reaction control.

The addition modification reaction effected by the unsaturated carboxylic acid or anhydride thereof is preferably conducted at a temperature within a range from 150 to 250°C. The quantity of modification and the modification temperature are preferably adjusted so as to leave no residual unsaturated carboxylic acid or anhydride thereof. The quantity of modification of the unsaturated carboxylic acid or anhydride thereof is preferably within a range from 0.01 to 0.5 mols, and even more preferably from 0.02 to 0.2 mols, per 100 g of the resin acid or hydrocarbon resin. Either a single unsaturated carboxylic acid or anhydride thereof may be used alone, or a combination of a plurality of compounds containing an arbitrary quantity of each compound may be used.

Furthermore, the esterification reaction by the unsaturated carboxylic acid or anhydride thereof can be conducted using normal methods. The reaction is usually conducted at a temperature within a range from 150 to 300°C, but this temperature can be set with due consideration of the boiling point and reactivity of the compounds being used. Furthermore, a catalyst may be used within these reactions if required. Examples of suitable catalysts include organic sulfonic acids such as benzenesulfonic acid, p-toluenesulfonic acid, p-dodecylbenzenesulfonic acid, methanesulfonic acid and ethanesulfonic acid, mineral acids such as sulfuric acid and hydrochloric acid, as well as trifluoromethylsulfuric acid and trifluoromethylacetic acid. Moreover, metal complexes such as tetrabutyl zirconate and tetraisobutyl titanate, and metal salt catalysts such as magnesium oxide, magnesium hydroxide, magnesium acetate, calcium oxide, calcium hydroxide, calcium acetate, zinc oxide and zinc acetate can also be used. These catalysts are typically used in a quantity within a range from 0.01 to 5% by weight relative to the resulting ester-modified product. In order to suppress coloration of the ester-modified product caused by catalyst use, a compound such as hypophosphorous acid, triphenyl phosphite, triphenyl phosphate or triphenylphosphine may be used in combination with the catalyst.

The ester-modified product obtained in the above reaction preferably has a polystyrene equivalent weight average molecular weight, determined by gel permeation chromatography (hereafter, GPC), within a range from 5,000 to 200,000, an acid number of not more than 40, and a melting point of 70°C or above. If these physical properties fall outside the above ranges, then the drying properties and emulsion properties obtained upon ink production tend to be unsatisfactory.

The method for producing a pigment composition according to the present invention comprises adding 20 to 80% by weight of the above ester-modified product to a crude copper phthalocyanine, and conducting dry grinding. If the quantity added of the ester-modified product is less than 20% by weight, then the dispersibility of the ground product (the pigment composition) upon mixing with a printing ink solvent or varnish, and the milling properties of the ink tend to deteriorate, whereas if the quantity exceeds 80% by weight, then the probability of the ester-modified product adhering and sticking to the inside of the dry grinding apparatus tends to increase.

In the present invention, dry grinding describes the process of grinding the crude copper phthalocyanine using a grinder containing a grinding medium such as beads, without any substantial presence of liquid substances. The grinding is achieved by employing the grinding force or destructive force generated by collisions between the grinding media. Examples of dry grinding apparatus that can be used include conventional apparatus such as a dry attritor, ball mill or vibration mill, and the grinding time can be set appropriately in accordance with the apparatus being used and the desired ground particle size. Furthermore, the dry grinding may be conducted in a deoxygenated atmosphere by injecting the inside of the dry grinding apparatus with nitrogen gas or the like. The temperature during the dry grinding is preferably within a range from 80 to 170°C. The dry grinding temperature is preferably set to a high temperature in order to reduce the aspect ratio of the final β-crystalline copper phthalocyanine particles, but if the dry grinding temperature is increased beyond the softening point of the ester-modified product, then the probability of the ester-modified product adhering and sticking to the inside of the apparatus tends to increase undesirably.

The method for producing a printing ink according to the present invention comprises heating a pigment composition, obtained using the method for producing a pigment composition according to the present invention, within a printing ink solvent or varnish at a temperature within a range from 80 to 170°C. The copper phthalocyanine particles within the pigment composition obtained using the above method for producing a pigment composition according to the present invention exist as an α/β crystalline mixture that contains particles in which the crystalline form has been converted from the β-form to the α-form as a result of the dry grinding, and consequently this mixture is mixed with a printing ink solvent or varnish and then subjected to a heat treatment in order to achieve transition to the β-crystalline form. In the present invention, the expression β-crystalline copper phthalocyanine particles includes those cases where the majority of the crystals are in the β-form but a very small quantity of α-crystals also exists, although the proportion of β-crystals is preferably not less than 99% and the proportion of α-crystals not greater than 1%.

In the above heat treatment, heating may be conducted under gentle stirring, and a dispersion device is not particularly necessary. The time required to achieve satisfactory dispersion of the pigment composition and a favorable transition of the α-crystals to β-crystals varies depending on the printing ink solvent or varnish that is used, but the process is typically complete in a period within a range from several minutes to approximately three hours. Following the heat treatment, preparation of the base ink is completed by conducting milling with a three roll mill.

The aspect ratio of the primary particles (β-crystalline copper phthalocyanine particles) of pigment within a printing ink produced in accordance with the present invention is within a range from 1 to 2, substantially equal to the value obtained for pigment primary particles obtained using the solvent salt milling method, and the hue of the pigment is a greenish color.

Examples of the aforementioned printing ink solvent include any of the solvents suited to use within printing inks, such as high boiling point petroleum-based solvents, aliphatic hydrocarbon solvents and higher alcohol-based solvents, and solvents containing no aromatics may also be used. Examples of preferred solvents include naphthene-based hydrocarbon solvents or paraffin-based hydrocarbon solvents. Furthermore, these solvents may be used either alone, or in combinations of two or more different solvents.

The above naphthene-based hydrocarbon solvents or paraffin-based hydrocarbon solvents are so-called aromaless (free) solvents, and commercially available examples include Aroma-free Solvent No. 4 to No. 7 and O-Solvent H manufactured by Nippon Oil Corporation, Super Sol LA35 and LA38 manufactured by Idemitsu Kosan Co., Ltd., Exxsol D80, D110, D120, D130, D160, D100K, D120K and D130K manufactured by Exxon Mobil Corporation, D-Sol 280 and D-Sol 300 manufactured by Isu Chemical Co., Ltd., and MagieSol-40, 44, 47, 52 and 60 manufactured by Magie Brothers Oil Company, although the above solvents should not be construed as being limited thereto, and the use of arbitrary mixtures of the above solvents is also possible. Particularly preferred solvents exhibit an aniline point that falls within a range from 60 to 110°C. If the aniline point is higher than 110°C, then the solubility of the printing ink resin tends to be poor, the fluidity upon conversion to a printing ink is inadequate, and the ink transfer properties within a printer tend to deteriorate, meaning transfer faults occur, and the degree of ink leveling on the printed matter following printing is unsatisfactory, resulting in an increased likelihood of print gloss faults. In contrast, if the aniline point is lower than 60°C, then inferior solvent removal from the printed ink film and inferior drying properties become increasingly likely, which can cause blocking and offset problem.

The aforementioned printing ink varnish comprises a printing ink resin dissolved in an aforementioned printing ink solvent and/or a vegetable oil, and if required, may also include an added gelling agent.

There are no particular restrictions on the above printing ink resin, provided it is a resin suitable for use within a printing ink, although in the case of offset lithographic printing ink resins, the use of rosin-modified phenolic resins is common. Furthermore, an ester-modified product of the present invention can also be used.

The above vegetable oils describe triglycerides of glycerol and fatty acids, wherein at least one fatty acid contains at least one carbon-carbon unsaturated bond. Examples of suitable vegetable oils include flaxseed oil, linseed oil, perilla oil, oiticica oil, olive oil, cacao oil, kapok oil, Japanese nutmeg seed oil, mustard seed oil, apricot kernel oil, tung oil, kukui nut oil, walnut oil, poppy seed oil, sesame oil, safflower oil, radish seed oil, soybean oil, hydnocarpus oil, camellia oil, corn oil, rapeseed oil, niger seed oil, bran oil, palm oil, castor oil, sunflower oil, grape seed oil, almond oil, pine seed oil, cottonseed oil, coconut oil, peanut oil and dehydrated castor oil. In the present invention, particularly preferred vegetable oils include those having an iodine number of at least 100, and vegetable oils having an iodine number of 120 or greater are even more desirable. By using a vegetable oil with an iodine number of at least 100, the drying of the ink film by oxidative polymerization can be enhanced, and such inks are particularly useful in sheet-fed printing systems that do not employ a hot air dryer.

In the present invention, recycled vegetable oils such as deep-frying oils that have been used for cooking and then recovered and recycled can also be used. Recycled vegetable oils for which the water content is not more than 0.3% by weight, the iodine number is at least 100, and the acid number is not more than 3 are preferred. By reducing the water content to not more than 0.3% by weight, impurities such as salts that are contained within the water and can have an adverse effect on the emulsion behavior of the ink can be effectively removed, whereas conducting recycling so that the iodine number is at least 100 enables an oil with favorable drying properties, namely favorable oxidative polymerization properties, to be obtained, and conducting recycling by selecting those vegetable oil portions for which the acid number is not more than 3 enables excessive emulsification of the ink to be suppressed. Examples of suitable methods for recycling recovered vegetable oils include the removal of sediments by filtration and/or settling, and performing discoloration using activated earth or the like, although the above methods should not be construed as being limited thereto.

Metal complexes are generally used as the aforementioned gelling agent, and aluminum complex compounds are particularly representative. Examples of these aluminum complex compounds include cyclic aluminum compounds such as cyclic aluminum oxide octoate (Algomer 800A, manufactured by Kawaken Fine Chemicals Co., Ltd.) and cyclic aluminum oxide stearate (Algomer 1000S, manufactured by Kawaken Fine Chemicals Co., Ltd.), aluminum alcoholates such as aluminum ethylate, aluminum isopropylate (AIPD, manufactured by Kawaken Fine Chemicals Co., Ltd.), aluminum sec-butylate (ASPD, manufactured by Kawaken Fine Chemicals Co., Ltd.) and aluminum isopropylate-mono-sec-butylate (AMD, manufactured by Kawaken Fine Chemicals Co., Ltd.), aluminum alkyl acetates such as aluminum di-n-butoxide ethylacetoacetate (Chelope-A1-EB2, manufactured by Hope Chemical Co., Ltd.), aluminum di-n-butoxide methylacetoacetate (Chelope-A1-MB2, manufactured by Hope Chemical Co., Ltd.), aluminum di-iso-butoxide methylacetoacetate (Chelope-A1-MB12, manufactured by Hope Chemical Co., Ltd.), aluminum di-iso-butoxide ethylacetoacetate (Chelope-A1-EB102, manufactured by Hope Chemical Co., Ltd.), aluminum di-iso-propoxide ethylacetoacetate (Chelope-A1-EP12, manufactured by Hope Chemical Co., Ltd., and ALCH, manufactured by Kawaken Fine Chemicals Co., Ltd.), aluminum tris(ethylacetoacetate) (ALCH-TR, manufactured by Kawaken Fine Chemicals Co., Ltd.), aluminum tris(acetylacetonate) (Alumichelate-A, manufactured by Kawaken Fine Chemicals Co., Ltd.) and aluminum bis(ethylacetoacetate)-monoacetylacetonate -(Alumichelate-D, manufactured by Kawaken Fine Chemicals Co., Ltd.), aluminum soaps such as aluminum stearate (manufactured by NOF Corporation), aluminum oleate, aluminum naphthenate and aluminum laurate, as well as aluminum acetylacetonate.
These gelling agents are typically used in a quantity within a range from 0.1 % to 10% by weight relative to 100 parts by weight of the varnish.

A printing ink produced according to the present invention can be used favorably as a normal offset lithographic printing ink such as a sheet-fed ink, heat-set web offset ink, or news ink (cold-set web ink). This type of printing ink typically has a composition such as that shown below:
Pigment: 5 to 30% by weight
Resin: 10 to 40% by weight
Solvent: 0 to 60% by weight
Vegetable oil: 0 to 70% by weight
Drying accelerator: 0 to 5% by weight
Other additives: 0 to 10% by weight
A printing ink according to the present invention may have a similar composition and similar blend ratios to those shown above, but the blend ratios may also be adjusted in accordance with factors such as the intended use. In the pigment composition of the present invention, the blend quantities are usually recorded separately for the pigment and the resin. Furthermore, if the pigment composition is used within a VOC-free ink, then the blend quantity of hydrocarbon solvent within the composition is 0% by weight. In such a case, from 0 to 60% by weight of a fatty acid monoester compound may be added to the composition if required. Moreover, a VOC-free printing ink obtained using the present invention preferably has a volatile component upon heating for one hour at 110°C that is not more than 1%.

Examples of the above fatty acid monoester compound include ester compounds of an animal or vegetable oil fatty acid and a monohydric alkyl alcohol. Specific examples include ester compounds of a fatty acid such as coconut oil fatty acid, palm oil fatty acid, rapeseed oil fatty acid, soybean oil fatty acid, hydrogenated soybean oil fatty acid, linseed oil fatty acid, tung oil fatty acid, tall oil fatty acid or dehydrated castor oil fatty acid, and an alcohol of 1 to 8 carbon atoms.

Examples of the above drying accelerator include known compounds such as the metal salts, for example the calcium, cobalt, lead, iron, manganese, zinc and zirconium salts, of organic carboxylic acids such as acetic acid, propionic acid, butyric acid, isopentanoic acid, hexanoic acid, 2-ethylbutyric acid, naphthenic acid, octylic acid, nonanoic acid, decanoic acid, 2-ethylhexanoic acid, isooctanoic acid, isononanoic acid, lauric acid, palmitic acid, stearic acid, oleic acid, linoleic acid, neodecanoic acid, versatic acid, secanoic acid, tall oil fatty acid, linseed oil fatty acid, soybean oil fatty acid, dimethylhexanoic acid, 3,5,5-trimethylhexanoic acid and dimethyloctanoic acid, and suitable combinations of a plurality of these drying accelerator may be used to accelerate curing at both the printed ink surface and the interior of the ink film. Furthermore, the metal complexes disclosed in Japanese Patent Laid-Open No. H04-334393, formed from 1,10-phenanthroline, a polyvalent metal and a carboxylic acid, can also be used, and specific examples include the complexes disclosed in example 1 through 6 of the publication, such as a manganese / acetic acid / 1,10-phenanthroline complex obtained by the reaction of manganese acetate and 1,10-phenanthroline, a manganese / octylic acid / 1,10-phenanthroline complex obtained by the reaction of manganese octylate and 1,10-phenanthroline, a manganese / naphthenic acid / 1,10-phenanthroline complex obtained by the reaction of manganese naphthenate and 1,10-phenanthroline, a manganese / tall oil acid / 1,10-phenanthroline complex obtained by the reaction of manganese tallate and 1,10-phenanthroline, an iron / naphthenic acid / 1,10-phenanthroline complex obtained by the reaction of iron naphthenate and 1,10-phenanthroline, and a cobalt / neodecanoic acid / 1,10-phenanthroline complex obtained by the reaction of cobalt neodecanoate and 1,10-phenanthroline. Moreover, these dryers can also be capsulated within substances that are insoluble in the solvent used in the present invention.

If required, other additives may also be used within the printing ink according to the present invention. Examples of such additives include natural waxes such as carnauba wax, Japan wax, lanolin, montan wax, paraffin wax and microcrystalline wax, and synthetic waxes such as Fischer-Tropsch wax, polyethylene wax, polypropylene wax, polytetrafluoroethylene wax, polyamide wax and silicone compounds, which are used as abrasion resistance agents, anti-blocking agents, lubricants and scratch prevention agents. Furthermore, anti-skinning agents including phenols such as cresol, guaiacol and o-isopropylphenol, and oximes such as butyraldoxime, methyl ethyl ketoxime and cyclohexanonoxime may also be used.

### EXAMPLES

As follows is a more detailed description of the present invention based on examples. In the examples, "parts" refers to parts by weight. Furthermore, the cloud point was measured by placing 2 g of the ester-modified product and 18 g of a hydrocarbon solvent (Aroma-free Solvent No. 7 (AF7) manufactured by Nippon Oil Corporation) in a test tube, and then conducting a measurement using a Chemotoronic fully automatic cloud point tester (manufactured by Novocontrol Co., Ltd.). Furthermore, the ink tack was measured using an Inkometer manufactured by Toyo Seiki Co., Ltd., under conditions including a roll temperature of 30°C and 400 rpm, and refers to the value measured one minute after test started. Measurement of the crystalline form of the β-copper phthalocyanine pigment was conducted using an X-ray diffraction apparatus, and measurement of the aspect ratio was conducted using an electron microscope.

### (Ester-modified product Production Example 1)

A flask fitted with a stirrer, a reflux condenser and a thermometer was charged with 500 parts of a polymerized rosin (manufactured by Harima Chemicals, Inc., and containing 60% by weight of dimerized adducts) and 30 parts of maleic anhydride, the temperature was raised while the flask was injected with nitrogen gas, and a reaction was then conducted at 180°C for one hour, yielding a maleic anhydride-modified product. Subsequently, 165 parts of 2,4-diethyl-1,5-pentanediol was added, and by conducting a reaction at 240°C for 15 hours while water was isolated and removed from the system, an ester-modified product (A1) was obtained with an acid number of 24, a cloud point of 79°C, a melting point of 154°C, and a polystyrene equivalent weight average molecular weight determined by GPC (hereafter, Mw) of 45,000.

### (Ester-modified product Production Example 2)

With the exception of replacing the 165 parts of 2,4-diethyl-1,5-pentanediol from the ester-modified product production example 1 with 149 parts of 2,2-butylethylpropanediol and 9.2 parts of trimethylolpropane, an ester-modified product (A2) with an acid number of 23, a cloud point of 78°C, a melting point of 153°C, and a Mw value of 42,000 was obtained in the same manner as the production example 1.

### (Ester-modified product Production Example 3)

With the exception of replacing the 165 parts of 2,4-diethyl-1,5-pentanediol from the ester-modified product production example 1 with 156 parts of 2,4-diethyl-1,5-pentanediol, 22 parts of 1-tridecanol and 11 parts of sebacic acid, an ester-modified product (A3) with an acid number of 24, a cloud point of 75°C, a melting point of 147°C, and a Mw value of 42,000 was obtained in the same manner as the production example 1.

### (Ester-modified product Production Example 4)

With the exception of replacing the 165 parts of 2,4-diethyl-1,5-pentanediol from the ester-modified product production example 1 with 165 parts of 1,9-nonanediol, an ester-modified product (A4) with an acid number of 23, a cloud point of 97°C, a melting point of 158°C, and a Mw value of 50,000 was obtained in the same manner as the production example 1.

### (Ester-modified product Production Example 5)

With the exception of replacing the 165 parts of 2,4-diethyl-1,5-pentanediol from the ester-modified product production example 1 with 93 parts of 1,4-butanediol, an ester-modified product (A5) with an acid number of 22, a cloud point of 105°C, a melting point of 165°C, and a Mw value of 55,000 was obtained in the same manner as the production example 1.

### (Ester-modified product Production Example 6)

A similar flask to that used in the ester-modified product production example 1 was charged with 400 parts of a polymerized rosin (manufactured by Harima Chemicals, Inc., and containing 60% by weight of dimerized adducts), 100 parts of Quintone 1345 (a dicyclopentadiene resin manufactured by Zeon Corporation) and 30 parts of maleic anhydride, the temperature was raised while the flask was injected with nitrogen gas, and a reaction was then conducted at 180°C for one hour, yielding a maleic anhydride-modified product. Subsequently, 141 parts of 2,4-diethyl-1,5-pentanediol was added, and by then conducting a reaction at 240°C for 15 hours while water was isolated and removed from the system, an ester-modified product (A6) was obtained with an acid number of 20, a cloud point of 87°C, a melting point of 164°C, and a Mw value of 45,000.

### (Ester-modified product Production Example 7)

A flask fitted with a stirrer, a reflux condenser and a thermometer was charged with 500 parts of Quintone 1325 (a dicyclopentadiene resin manufactured by Zeon Corporation) and 30 parts of maleic anhydride, the temperature was raised while the flask was injected with nitrogen gas, and a reaction was then conducted at 180°C for three hours, yielding a maleic anhydride-modified product. Subsequently, 33 parts of 2,4-diethyl-1,5-pentanediol was added, and by conducting a reaction at 240°C for 15 hours while water was isolated and removed from the system, an ester-modified product (A7) was obtained with an acid number of 15, a cloud point of 84°C, a melting point of 151 °C, and a Mw value of 47,000.

### (Ester-modified product Production Example 8)

With the exception of replacing the 33 parts of 2,4-diethyl-1,5-pentanediol from the ester-modified product production example 7 with 29 parts of 2,2-butylethylpropanediol and 1.8 parts of trimethylolpropane, an ester-modified product (A8) with an acid number of 14, a cloud point of 83°C, a melting point of 150°C, and a Mw value of 43,000 was obtained in the same manner as the production example 7.

### (Ester-modified product Production Example 9)

With the exception of replacing the 33 parts of 2,4-diethyl-1,5-pentanediol from the ester-modified product production example 7 with 31 parts of 2,4-diethyl-1,5-pentanediol, 4.2 parts of 1-tridecanol and 2.1 parts of sebacic acid, an ester-modified product (A9) with an acid number of 16, a cloud point of 80°C, a melting point of 144°C, and a Mw value of 44,000 was obtained in the same manner as the production example 7.

### (Ester-modified product Production Example 10)

With the exception of replacing the 33 parts of 2,4-diethyl-1,5-pentanediol from the ester-modified product production example 7 with 33 parts of 1,9-nonanediol, an ester-modified product (A10) with an acid number of 14, a cloud point of 99°C, a melting point of 155°C, and a Mw value of 51,000 was obtained in the same manner as the production example 7.

### (Ester-modified product Production Example 11)

With the exception of replacing the 33 parts of 2,4-diethyl-1,5-pentanediol from the ester-modified product production example 7 with 18 parts of 1,4-butanediol, an ester-modified product (A11) with an acid number of 14, a cloud point of 108°C, a melting point of 163°C, and a Mw value of 58,000 was obtained in the same manner as the production example 7.

### (Rosin-modified Phenolic Resin Production Example)

A similar flask to that used in the ester-modified product production example 1 was charged with 665 parts of p-octylphenol, 654 parts of 37% formalin, and 490 parts of xylene, the temperature was raised to 50°C while the flask was injected with nitrogen gas, and a dispersion prepared by dispersing 7 parts of calcium hydroxide in 35 parts of water was then added to the flask. The temperature was then raised further, and a reaction was conducted at 95°C for 4 hours. Subsequently, the reaction system was cooled, neutralized with sulfuric acid, washed with water, and then allowed to leave. The separated resol-xylene solution was then filtered through a filter (with a mesh size of 10 µm). The net resol quantity within the resulting resol-xylene solution was determined by hot air drying at 150°C for 30 minutes, and was found to be 55%. Subsequently, a similar flask was charged with 60 parts of rosin, the temperature was raised to 200°C while the flask was injected with nitrogen gas, 73 parts of the above resol-xylene solution (equivalent to a solid fraction of 40 parts) was added dropwise over a period of two hours, and following completion of the dropwise addition, the temperature was raised further, 6.0 parts of glycerol was added at 250°C, and reaction was conducted for 12 hours while xylene and water were isolated and removed from the system, thus forming a rosin-modified phenolic resin (A12) with an acid number of 25, a cloud point of 90°C, a melting point of 145°C, and a Mw value of 28,000.

### (Pigment Composition Production Example 1)

80 parts of crude copper phthalocyanine and 20 parts of the ester-modified product (A1) obtained above were combined in a dry attritor, and the mixture was ground at 80°C for one hour, yielding a pigment composition (B 1).

### (Pigment Composition Production Examples 2 to 17)

Using the blend ratios shown below in Table 1, grinding was conducted in the same manner as that described in the pigment composition production example 1, yielding pigment compositions (B2 to B 17).

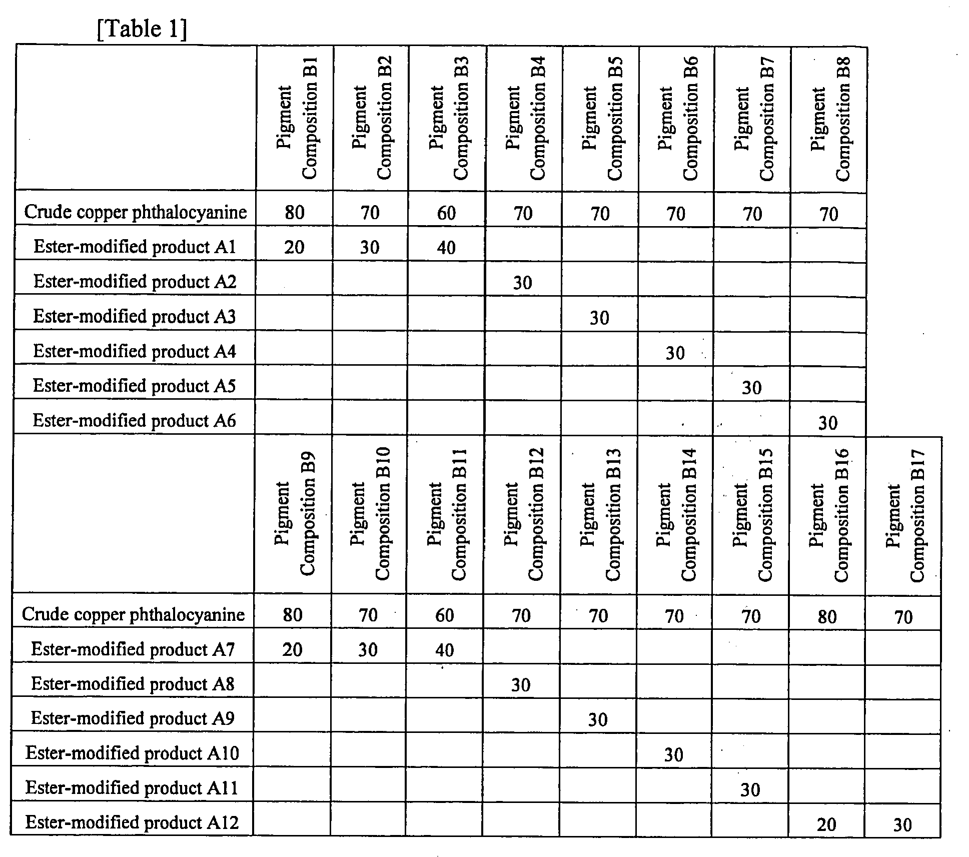

### (Varnish Production Example 1)

A similar flask to that used in the ester-modified product production example 1 was charged with 50 parts of the ester-modified product (A1) obtained above, 15 parts of soybean oil, 34.5 parts of Aroma-free Solvent No. 5 (AF5) manufactured by Nippon Oil Corporation, and 0.5 parts of a gelling agent (ALCH) manufactured by Kawaken Fine Chemicals Co., Ltd., and the resulting mixture was then heated and reacted at 190°C for one hour under atmosphere of nitrogen gas, yielding a vanish (C1).

### (Varnish Production Examples 2 to 9)

Using the ratios shown in Table 2, reaction was conducted in the same manner as the varnish production example 1, yielding varnishes (C2 to C9). In Table 2, "AF4" refers to Aroma-free Solvent No. 4, manufactured by Nippon Oil Corporation.

**[Table 2]**

| | Varnish C1 | Varnish C2 | Varnish C3 | Varnish C4 | Varnish C5 | Varnish C6 | Varnish C7 | Varnish C8 | Varnish C9 |
|---|---|---|---|---|---|---|---|---|---|
| A1 | 50 | | | 50 | | | 50 | | |
| A7 | | 50 | | | 50 | | | 50 | |
| A12 | | | 50 | | | 50 | | | 50 |
| Soybean oil | 15 | 15 | 15 | 15 | 15 | 15 | 15 | 15 | 15 |
| AF5 | 34.5 | 34.5 | 34.5 | | | | | | |
| Soybean fatty acid butyl ester | | | | 34.5 | 34.5 | 34.5 | | | |
| AF4 | | | | | | | 34.5 | 34.5 | 34.5 |
| ALCH | 0.5 | 0.5 | 0.5 | 0.5 | 0.5 | 0.5 | 0.5 | 0.5 | 0.5 |

### (Example 1)

A similar flask to that used in the ester-modified product production example 1 was charged with 25 parts of the pigment composition (B1) obtained above and 66 parts of the varnish (C3) obtained above, and the resulting mixture was heated and mixed at 90°C for two hours under atmosphere of nitrogen, and then milled at 60°C using a three roll mill, thus forming a base ink. The pigment particles within the base ink had been dispersed to a size of not more than 7.5 µm. Subsequently, 8.1 parts of AF5 and 0.9 parts of manganese naphthenate were added to the base ink, yielding a sheet-fed printing ink with a tack of 9.4. Of the copper phthalocyanine particles contained within the thus obtained sheet-fed printing ink, the proportion of β-crystalline copper phthalocyanine particles was at least 99%, and the aspect ratio of those particles was 1.7.

### (Examples 2 to 15, Comparative Examples 1 and 2)

Using the blend ratios shown in Table 3, sheet-fed printing inks with a tack of 9.4 were prepared in the same manner as the example 1. In all of the sheet-fed printing inks, the proportion of β-crystalline copper phthalocyanine particles among the copper phthalocyanine particles was at least 99%, and the aspect ratio was within a range from 1 to 2.

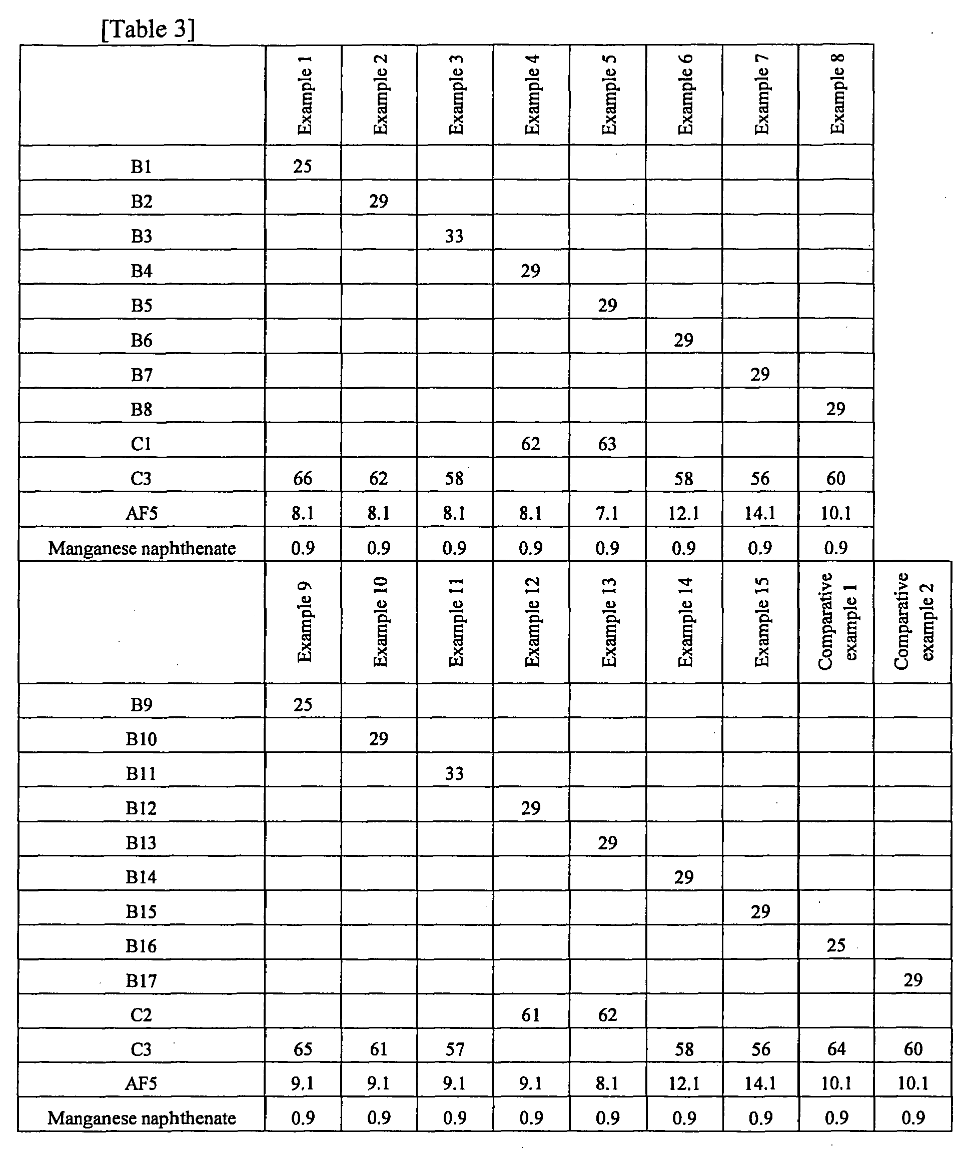

### (Examples 16 to 30, Comparative Examples 3 and 4)

Using the blend ratios shown in Table 4, sheet-fed printing inks with a tack of 9.4 were prepared in the same manner as the example 1. In all of the sheet-fed printing inks, the proportion of β-crystalline copper phthalocyanine particles among the copper phthalocyanine particles was at least 99%, and the aspect ratio was within a range from 1 to 2. Moreover, for each ink, the volatile component upon heating the ink for one hour at 110°C was not more than 1 %.

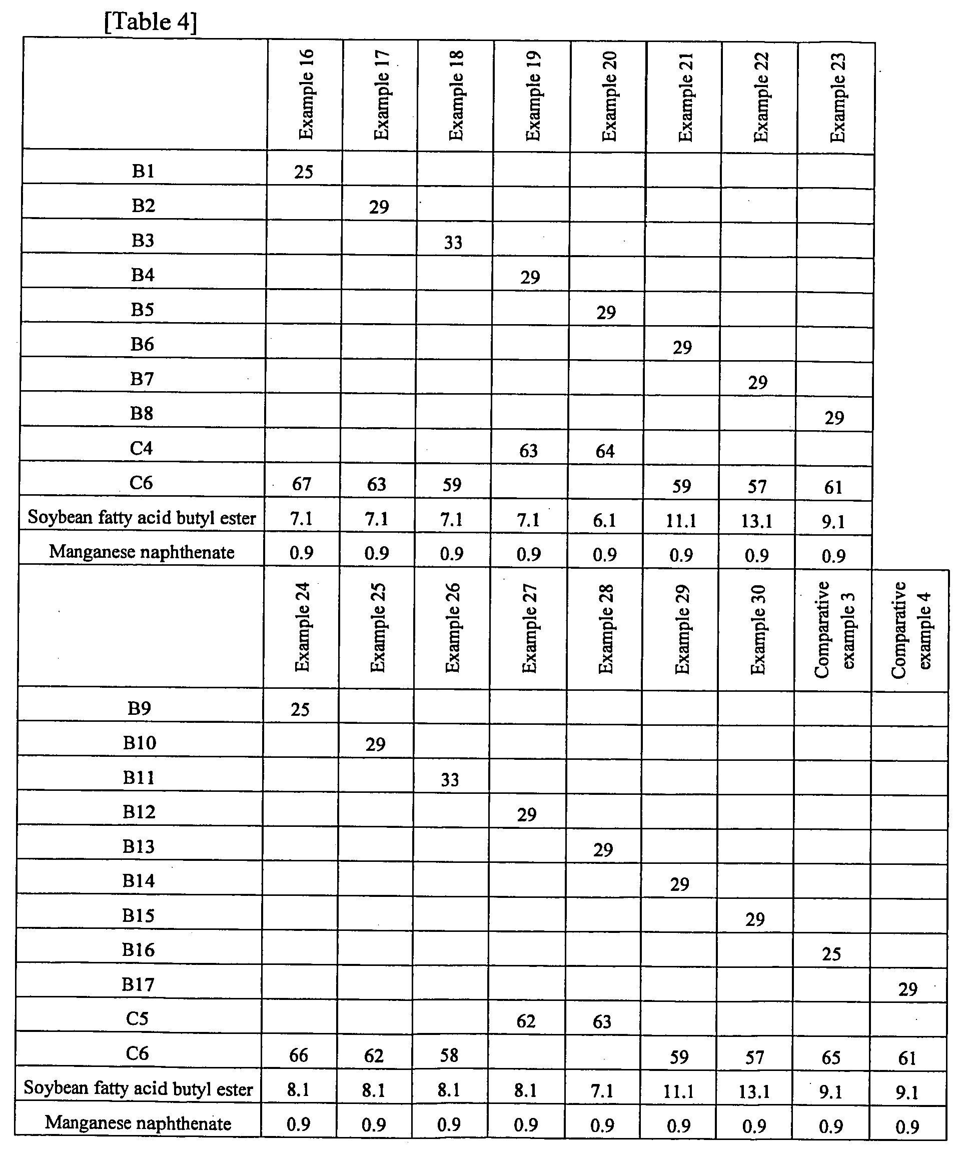

### (Example 31)

A similar flask to that used in the ester-modified product production example 1 was charged with 25 parts of the pigment composition (B1) obtained above and 61 parts of the varnish (C9) obtained above, and the resulting mixture was heated and mixed at 90°C for two hours under atmosphere of nitrogen, and then milled at 60°C using a three roll mill, thus forming a base ink. The pigment particles within the base ink had been dispersed to a size of not more than 7.5 µm. Subsequently, 14 parts of AF4 was added to the base ink, yielding a web offset printing ink with a tack of 6.8. Of the copper phthalocyanine particles contained within the thus obtained web offset printing ink, the proportion of β-crystalline copper phthalocyanine particles was at least 99%, and the aspect ratio of those particles was 1.8.

### (Examples 32 to 45, Comparative Examples 5 and 6)

Using the blend ratios shown in Table 5, web offset printing inks with a tack of 6.8 were prepared in the same manner as the example 31.

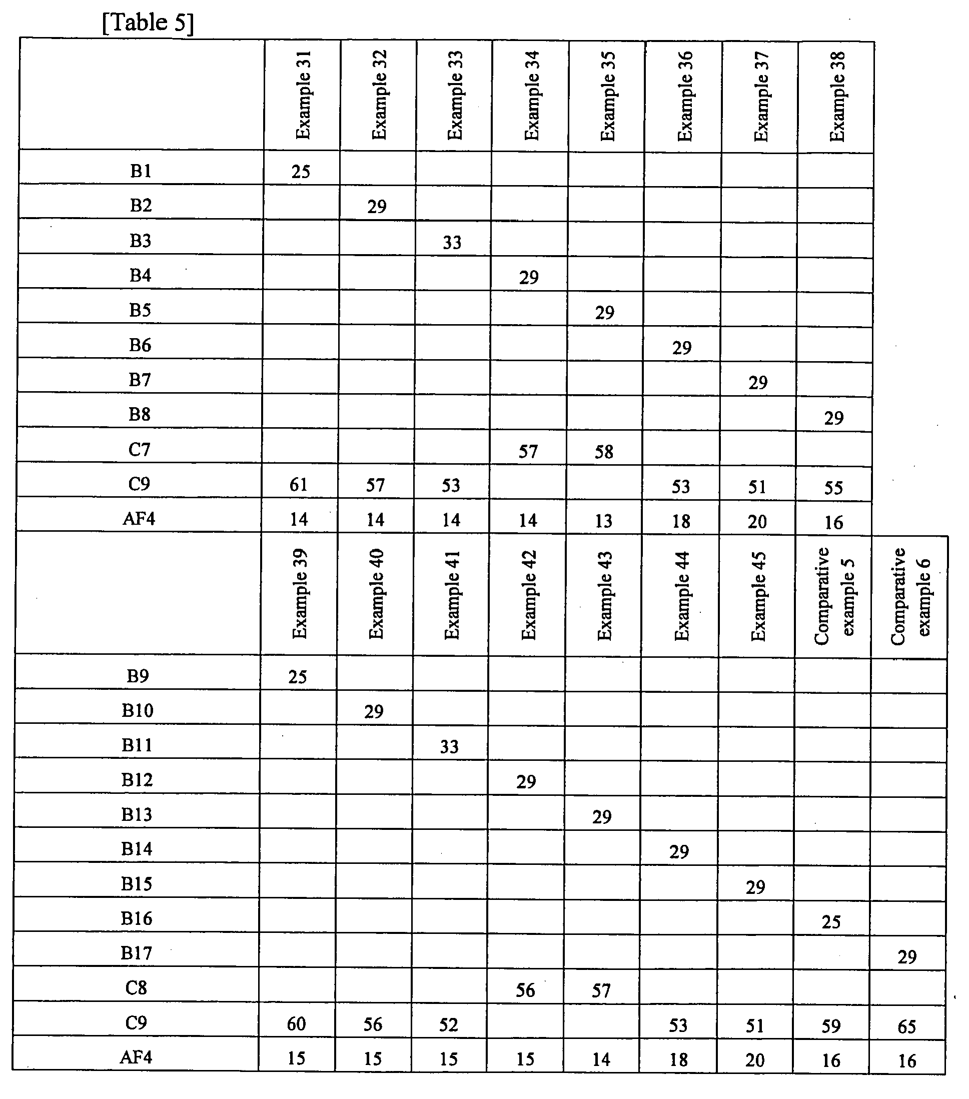

### (Sheet-fed Printing Test Evaluation)

Each of the inks from the examples 1 through 30 and the comparative examples 1 through 4 was used to print 20,000 sheets at a rate of 10,000 sheets/hour onto SK coated paper 4/6 90 kg (manufactured by Nippon Paper Group, Inc.), using a Mitsubishi Daiya I-4 sheet-fed printing press (manufactured by Mitsubishi Heavy Industries, Ltd.), and the printed matters were then compared in terms of the conditions of solid printed area, the gloss, and the occurrence of scumming. Water dampening was conducted using tap water containing 1.5% of Aquamagic NS (manufactured by Toyo Ink Mfg. Co., Ltd.), and in order to enable comparison of the print result near the lower limit of water tolerance, printing was conducted with a water dial value 2% higher than the water tolerance lower limit. The results are shown in Table 6.

**[Table 6]**

| | Solid printed area conditions | Gloss *^{Note 1} | Scumming | | Solid printed area conditions | Gloss *^{Note 1} | Scumming |
|---|---|---|---|---|---|---|---|
| Example 1 | Good | 55 | None | Example 9 | Good | 54 | None |
| Example 2 | Good | 57 | None | Example 10 | Good | 56 | None |
| Example 3 | Good | 59 | None | Example 11 | Good | 58 | None |
| Example 4 | Good | 57 | None | Example 12 | Good | 56 | None |
| Example 5 | Good | 58 | None | Example 13 | Good | 57 | None |
| Example 6 | Good | 55 | None | Example 14 | Good | 55 | None |
| Example 7 | Good | 54 | None | Example 15 | Good | 54 | None |
| Example 8 | Good | 57 | None | Example 24 | Good | 56 | None |
| Example 16 | Good | 56 | None | Example 25 | Good | 55 | None |
| Example 17 | Good | 58 | None | Example 26 | Good | 57 | None |
| Example 18 | Good | 60 | None | Example 27 | Good | 59 | None |
| Example 19 | Good | 59 | None | Example 28 | Good | 58 | None |
| Example 20 | Good | 60 | None | Example 29 | Good | 60 | None |
| Example 21 | Good | 56 | None | Example 30 | Good | 56 | None |
| Example 22 | Good | 55 | None | Comparative example 1 | Good | 45 | None |
| Example 23 | Good | 58 | None | Comparative example 2 | Good | 51 | None |
| | | | | Comparative example 3 | Good | 46 | None |
| | | | | Comparative example 4 | Good | 52 | None |

(Note 1): 60° gloss values were measured using a Gloss Meter GM-26 manufactured by Murakami Color Research Laboratory Co., Ltd.

### (Web Offset Printing Test Evaluation)

Each of the inks from the examples 31 through 45 and the comparative examples 5 and 6 was used to print 20,000 impressions at 800 rpm onto NPI coated paper 66.5 kg (manufactured by Nippon Paper Group, Inc.), using a Mitsubishi BT2-800NEO web offset printing press (manufactured by Mitsubishi Heavy Industries, Ltd.), and the printed matters were then compared in terms of the conditions of solid printed area, the gloss, and the occurrence of scumming. Water dampening was conducted using tap water containing 1.5% of Aquamagic NS (manufactured by Toyo Ink Mfg. Co., Ltd.), and in order to enable comparison of the print result near the lower limit of water tolerance, printing was conducted with a water dial value 2% higher than the water tolerance lower limit. The results are shown in Table 7.

**[Table 7]**

| | Solid printed area conditions | Gloss *^{Note 1} | Scumming | | Solid printed area conditions | Gloss *^{Note 1} | Scumming |
|---|---|---|---|---|---|---|---|
| Example 31 | Good | 54 | None | Example 39 | Good | 53 | None |
| Example 32 | Good | 56 | None | Example 40 | Good | 55 | None |
| Example 33 | Good | 58 | None | Example 41 | Good | 57 | None |
| Example 34 | Good | 56 | None | Example 42 | Good | 55 | None |
| Example 35 | Good | 57 | None | Example 43 | Good | 56 | None |
| Example 36 | Good | 54 | None | Example 44 | Good | 54 | None |
| Example 37 | Good | 53 | None | Example 45 | Good | 53 | None |
| Example 38 | Good | 56 | None | Comparative example 5 | Good | 44 | None |
| | | | | Comparative example 6 | Good | 50 | None |

(Note 1): 60° gloss values were measured using a Gloss Meter GM-26 manufactured by Murakami Color Research Laboratory Co., Ltd.

As described above, the method for producing a pigment composition according to the present invention enables a copper phthalocyanine pigment composition that has a small aspect ratio and a greenish hue, and exhibits excellent dispersibility and particularly superior print gloss when prepared in the form of an ink, to be produced simply and at low cost, and moreover, the method for producing a printing ink according to the present invention enables the provision of a printing ink that not only exhibits excellent printing properties such as fluidity, tack and coloration, but also produces excellent print gloss, together with a printed matter obtained by conducting printing using the printing ink. Furthermore, because a pigment composition obtained using the production method of the present invention exhibits excellent pigment dispersibility, it enables excellent printability to be achieved for printing inks prepared using non-aromatic solvents and vegetable oils, and printing inks prepared from vegetable oil components that contain no volatile solvents.

It will be apparent to those skilled in the art that the foregoing description represents preferred embodiments of the present invention, and that many modifications and variations are possible without departing from the spirit and scope of the present invention.

## Claims

1. A method for producing a pigment composition, comprising adding, to a crude copper phthalocyanine, from 20 to 80% by weight of an ester-modified product produced by modification of a resin acid and/or a hydrocarbon resin with an unsaturated carboxylic acid or an anhydride thereof and an alcohol, and conducting dry grinding.

2. The method for producing a pigment composition according to claim 1, wherein the hydrocarbon resin comprises, as a structural component, a 5-membered ring compound represented by a general formula (I) shown below: 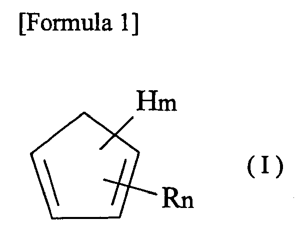 (wherein, H represents a hydrogen atom, R represents an alkyl group of 1 to 3 carbon atoms, and m and n each represent an integer from 0 to 6, provided that m+n = 6).

3. The method for producing a pigment composition according to either claim 1 or 2, wherein the resin acid comprises not less than 30% by weight of a dimerized addition resin acid.

4. The method for producing a pigment composition according to any one of claims 1 through 3, wherein the alcohol is an alcohol of 6 to 20 carbon atoms.

5. The method for producing a pigment composition according to claim 4, wherein the alcohol of 6 to 20 carbon atoms contains a branched alkyl group, and the total number of carbon atoms within the branched alkyl group is not less than 4.

6. The method for producing a pigment composition according to any one of claims 1 through 5, wherein the ester-modified product is an ester-modified product obtained by further reaction with a carboxyl group-containing compound of not less than 6 carbon atoms.

7. A method for producing a printing ink, comprising heating a pigment composition obtained using the method according to any one of claims 1 through 6 within a printing ink solvent or varnish at a temperature within a range from 80 to 170°C.

8. The method for producing a printing ink according to claim 7, wherein a volatile component upon heating the printing ink for one hour at 110°C is not more than 1 %.

9. The method for producing a printing ink according to either claim 7 or 8, wherein of the copper phthalocyanine particles contained within the produced printing ink, a proportion of β-crystalline copper phthalocyanine particles with an aspect ratio of 1 to 2 is not less than 99%.

10. A printed matter obtained by printing a printing ink produced using the method for producing a printing ink according to any one of claims 7 through 9 onto a substrate.
